# EUROPÄISCHE PATENTSCHRIFT

(11) **EP 0 515 803 B1**
(45) Veröffentlichungstag und Bekanntmachung des Hinweises auf die Patenterteilung: **04.01.1995**
(21) Anmeldenummer: 92105838.4
(22) Anmeldetag: 04.04.1992
(51) Int. Cl.: B66F 3/12, F16B 37/10

(54) **Wagenheber**
Vehicle jack
Cric de véhicule

(30) Priorität: 30.04.1991 DE 4114129
(43) Veröffentlichungstag der Anmeldung: 02.12.1992
(73) Patentinhaber: AUGUST BILSTEIN GMBH & CO. KG, 58240 Ennepetal (DE)
(72) Erfinder: Alten, Ferdinand, W-5509 Mandern (DE); Brosius, Peter, W-5511 Ayl (DE); Erschens, Willi, Ing., W-5509 Waldweiler (DE); Grave, Klaus, Ing., W-5828 Ennepetal (DE); Hessek, Gerd, W-6648 Wadern-Lockweiler (DE); Mencher, Franz Josef, W-5509 Mandern (DE); Schardt, Peter, Dipl.-Ing., W-5506 Neunkirchen 1 (DE); Zender, Bernhard, W-5509 Waldweiler (DE)

(56) Entgegenhaltungen:
- EP-A- 0 340 551
- DE-U- 8 716 609
- FR-A- 2 165 221
- FR-A- 2 175 532
- FR-A- 2 300 039
- FR-A- 2 302 958
- FR-A- 2 649 170
- FR-A- 2 650 351
- US-A- 4 720 082

## Beschreibung

Die Erfindung betrifft einen Wagenheber mit einem Aufsetzfuß und einem Tragkopf, nach dem Oberbegriff des Anspruchs 1. Bei derartigen Wagenhebern wird die Hubbewegung durch ein Hebelgetriebe erzeugt, wobei das Hebelgetriebe über eine Spindel und eine Bewegungsmutter angetrieben wird. Die DE 87 16 609 U1 zeigt einen derartigen Wagenheber. Nachteilig hierbei muß die Bewegungsmutter bei der Montage über einen langen Weg auf die Spindel aufgeschraubt werden.

Der Erfindung liegt die Aufgabe zugrunde, die Bewegungsmutter derartig auszubilden, daß eine einfachere Montage ermöglicht wird. Dabei soll jedoch die Funktion und die erforderliche Kraftübertragung weiterhin gewährleistet sein.

Diese Aufgabe wird erfindungsgemäß durch die Merkmale des Anspruchs 1 gelöst. Vorteilhafte Weiterbildungen sind in den Ansprüchen 2 bis 8 beschrieben.

Die mit der Erfindung erzielten Vorteile bestehen insbesondere in einer einfachen Montage der Bewegungsmutter auf die Spindel. Die aus 2 Teilen bestehende Bewegungsmutter muß lediglich noch an der vorgesehenen Stelle zusammengelegt werden. Vorteilhaft kann vorher die Spindel mit einem Öl oder Fett versehen werden, das zur Schmierung und zum Korrosionsschutz erforderlich ist. Es ist nicht mehr erforderlich bei diesem Arbeitsgang die bisher vormontierte Bewegungsmutter zu verdrehen, um auch diese Stelle schützen zu können. Besonders die Ausbildung der Bewegungsmutter aus 2 Teilen mit einem sie verbindenden Gelenk bringt noch eine einfachere Montage, da dadurch bereits eine Vorfixierung der Teile zueinander besteht und diese nur noch zusammengeklappt werden müssen. Ein weiterer Vorteil ergibt sich bei der Fertigung der zweiteiligen Bewegungsmuttern gegenübereinteiligen Muttern. Da das gewindeformende Werkzeug nicht aus dem Fertigteil herausgeschraubt werden muß, ergibt sich beim Gießen, Massivumformen, Sintern oder spanabhebenden Bearbeiten einer geteilten Mutter eine wesentliche Zeitersparnis bei gleicher oder besserer Gewindequalität.

Darüber hinaus vorteilhaft weisen zweiteilige gegossene Bewegungsmuttern gegenüber einteiligen Bewegungsmuttern eine geringere Materialanhäufung auf, was die Lunkergefahr und die Schwindung reduziert.

Zur Materialentlastung einer vorzugsweise aus Kunststoff hergestellten Bewegungsmutter ist eine Fixierung der beiden Mutternteile gegeneinander durch Hülsen oder Metallbügel möglich.

Ein Ausführungsbeispiel der Erfindung ist in der Zeichnung dargestellt und wird im Folgenden näher Beschrieben.

Es zeigen
- Figur 1: einen kompletten Wagenheber,
- Figur 2: die Bewegungsmutter,
- Figur 3: die Ausbildung einer Bewegungsmutter mit einer Zapfenverbindung,
- Figur 4: die einstückige Ausbildung einer Bewegungsmutter, bestehend aus 2 Mutternteilen und einem Gelenk,
- Figur 5: die Ansicht einer Bewegungsmutter nach Figur 4 und
- Figur 6: die Montage einer Bewegungsmutter nach Figur 4 und 5

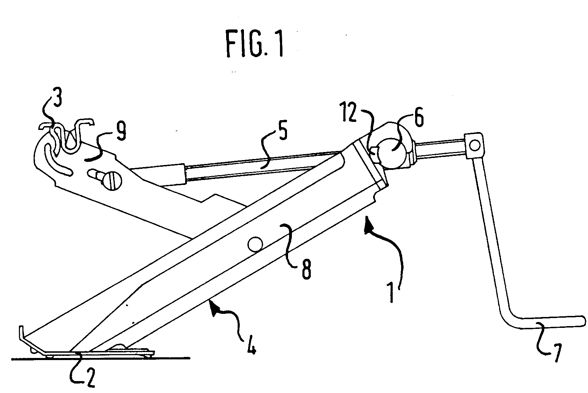

Figur 1 zeigt einen Wagenheber 1 mit einem Aufsetzfuß 2 und einem Tragkopf 3. Aufsetzfuß und Tragkopf sind an einem Hebelgetriebe 4 angeordnet, das über eine Spindel 5 und eine Bewegungsmutter 6 angetrieben wird. Eine Handkurbel 7 dient zum Drehen der Spindel 5. Im Ausführungsbeispiel ist das Hebelgetriebe des Wagenhebers als Standbein 8 und Tragarm 9 ausgebildet. Diese Bauform ist als Schwenkarmwagenheber bekannt. Die Erfindung ist jedoch in gleicher Weise auch für Wagenheber mit Parallelogramm oder Schezengestänge als Hebelgetriebe einsetzbar.

Spindel 8 und Bewegungsmutter 5 sind beweglich an den Tragarm 9 beziehungsweise das Standbein 8 angebunden. Die Anbindung der Bewegungsmutter 6 am Standbein 8 erfolgt über beidseitig seitlich an der Bewegungsmutter angeordnete Schwenkzapfen 10, 11 die in entsprechende Ausnehmungen 12 des Standbeins 8 eingreifen.

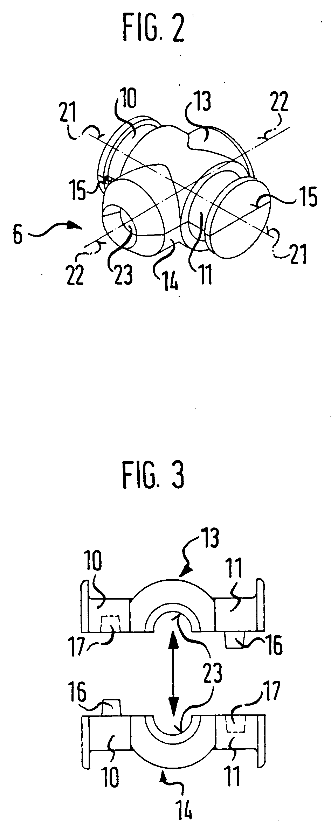

Aus den Figuren 2 und 3 ist ersichtlich, daß die Bewegungsmutter 6 aus zwei Teilen 13, 14 besteht. Diese Teile liegen an einer Verbindungsebene 15 aneinander. In der Ausbildung entsprechend Figur 3 sind beide Teile identisch ausgebildet und weisen jeweils einen Zapfen 16 und ein Zapfenloch 17 auf, die bei gegenseitig verdrehtem Zusammenbau als Zapfenverbindung ineinander fassen. Durch diese Maßnahme wird eine Lagefixierung der beiden Teile 13, 14 gegeneinander erreicht.

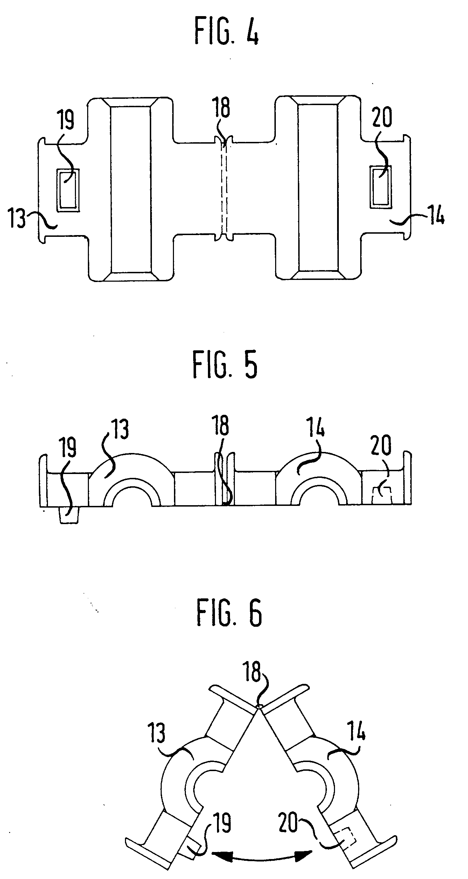

In der Ausbildung nach Figuren 4 bis 6 wird eine einteilige Ausbildung der Bewegungsmutter 6 dargestellt. Die beiden Teile 13, 14 der Mutter sind über ein Gelenk 18 miteinander verbunden. Im gezeigten Ausführungsbeispiel ist das Gelenk als Biegemembran ausgebildet, die aufgrund ihrer Elastizität ein Zusammenklappen um 180 ° zuläßt. Die Gegenseite der Bewegungsmutter 6 ist wiederum mit einem Zapfen 19 und einem Zapfenloch 20 versehen.

Die Verbindungsebene 15, an der die Teile 13, 14 zusammenliegen ist parallel zur Achse 21 der Schwenkzapfen 10, 11 und gleichfalls parallel zur Achse 22 des Bewegungsgewindes 23 angeordnet. Im Ausführungsbeispiel ist kein Parallelenversatz zwischen Achsen 21, 22 und Verbindungseben 15 vorhanden, so daß die Achsen 21, 22 auf der Verbindungsebene 15 liegen.

### Bezugszeichenliste

- 1: Wagenheber
- 2: Aufsetzfuß
- 3: Tragkopf
- 4: Hebelgetriebe
- 5: Spindel
- 6: Bewegungsmutter
- 7: Handkurbel
- 8: Standbein
- 9: Tragarm
- 10: Schwenkzapfen
- 11: Schwenkzapfen
- 12: Ausnehmung
- 13: Teil
- 14: Teil
- 15: Verbindungsebene
- 16: Zapfen
- 17: Zapfenloch
- 18: Gelenk
- 19: Zapfen
- 20: Zapfenloch
- 21: Achse
- 22: Achse
- 23: Bewegungsgewinde

## Patentansprüche

1. Wagenheber mit einem Aufsetzfuß und einem Tragkopf, die über ein Hebelgetriebe verbunden sind, welches über beweglich angebundene Spindel und Bewegungsmutter angetrieben wird, wobei die Bewegungsmutter beidseitig seitlich Schwenkzapfen mit einer gemeinsamen Achse, die sich quer zur Achse des Bewegungsgewindes erstreckt, aufweist, dadurch gekennzeichnet, daß die Bewegungsmutter (6) aus zwei Teilen (13, 14) gebildet ist, die an einer Verbindungsebene (15) zusammenliegen, welche parallel zur oder auf der Achse (21) der Schwenkzapfen (10,11) und Achse (22) des Bewegungsgewindes (23) liegt.

2. Wagenheber nach Anspruch 1, dadurch gekennzeichnet, daß die Achse (21) der Schwenkzapfen (10, 11) und/oder die Achse (22) des Bewegungsgewindes (23) auf der Verbindungsebene (15) liegt.

3. Wagenheber nach Anspruch 1 oder Anspruch 2 dadurch gekennzeichnet, daß die Teile (13, 14) der Bewegungsmutter (6) durch Verbindungen von Zapfen (16) und Zapfenloch (17) gegeneinander lagefixiert sind.

4. Wagenheber nach einem oder mehreren der Ansprüche 1 bis 3, dadurch gekennzeichnet, daß die Teile (13, 14) der Bewegungsmutter (6) über ein Gelenk (18) miteinander verbunden sind.

5. Wagenheber nach Anspruch 4, dadurch gekennzeichnet, daß die Teile (13, 14) der Bewegungsmutter (6) und das sie verbindende Gelenk (18) aus einem Stück bestehen, daß aus elastischem Material hergestellt ist.

6. Wagenheber nach Anspruch 5, dadurch gekennzeichnet, daß die Teile (13, 14) der Bewegungsmutter (6) und das sie verbindende Gelenk (18) aus elastischem Kunststoff hergestellt sind.

7. Wagenheber nach einem oder mehreren der Ansprüche 1 bis 6, dadurch gekennzeichnet, daß die Teile (13, 14) der Bewegungsmutter (6) durch um die Schwenkzapfen (10, 11) und/oder den Außenmantel des Bewegungsgewindes (23) angeordnete Hülsen zusammengehalten sind.

8. Wagenheber nach einem oder mehreren der Ansprüche 1 bis 7, dadurch gekennzeichnet, daß die Teile (13, 14) der Bewegungsmutter (6) durch einen den Außenmantel des Bewegungsgewindes (23) und die Schwenkzapfen (11, 12) ganz oder teilweise übergreifenden Metallbügel zusammengehalten sind.

9. Verfahren zum Herstellen eines Wagenhebers nach einem oder mehreren der Ansprüche 1 bis 8, dadurch gekennzeichnet, daß die Teile (13, 14) der Bewegungsmutter (6) durch Gießen oder Umformen in einem Arbeitsgang mit ihrer fertigen Außenform und der fertigen Hälfte des Bewegungsgewindes (23) hergestellt werden.

## Claims

1. A vehicle jack having a stand and a bearing head which are connected by way of a lever gearing, which is driven by way of a moveable connected spindle and movement nut, wherein the movement nut has laterally on both sides pivot spigots which have a common axis which extends transversely to the axis of the movement thread, characterised in that the movement nut (6) is formed from two parts (13, 14) which lie together in a connecting plane (15), which lies parallel with or on the axis (21) of the pivot spigots (10, 11) and the axis (22) of the movement thread (23).

2. A vehicle jack according to claim 1 characterised in that the axis (21) of the pivot spigots (10, 11) and/or the axis (22) of the movement thread (23) lie on the connecting plane (15).

3. A vehicle jack according to claim 1 or 2, characterised in that the parts (13, 14) of the movement nut (6) are fixed positionally with respect to each other by means of connections consisting of a joggle (16) and a joggle hole (17).

4. A vehicle jack according to one or more of claims 1 to 3, characterised in that the parts (13, 14) of the movement nut (6) are interconnected by way of a joint (18)

5. A vehicle jack according to claim 4, characterised in that the parts (13, 14) of the movement nut (6) and the interconnecting joint (18) consist of one piece which is produced from an elastic material.

6. A vehicle jack according to claim 5, characterised in that the parts (13, 14) of the movement nut (6) and the interconnecting joint (18) are produced from an elastic synthetic material.

7. A vehicle jack according to one or more of claims 1 to 6, characterised in that the parts (13, 14) of the movement nut (6) are held together by way of sleeves disposed around the spigot journals (10, 11) and/or the outer periphery of the movement thread (23).

8. A vehicle jack according to one or more of claims 1 to 7, characterised in that the parts (13, 14) of the movement nut (6) are held together by a metal bracket fully or partially encompassing the outer periphery of the movement thread (23) and the pivot spigots (11, 12).

9. A method for producing a vehicle jack according to one or more of claims 1 to 8, characterised in that the parts (13, 14) of the movement nut (6) are produced by casting or moulding in one step with their finished outer form and with their finished halves of the movement thread (23).

## Revendications

1. Cric de véhicule avec un pied d'appui et une tête de support, reliés par un mécanisme de levage commandé au moyen d'un arbre fileté et d'un écrou reliés à entraînement, dans lequel l'écrou d'entraînement présente de part et d'autre des tourillons de pivotement avec un axe commun perpendiculaire à l'axe du filet d'entraînement, caractérisé en ce que l'écrou d'entraînement (6) est réalisé en deux parties (13, 14) qui se superposent dans un plan de liaison (15) parallèle à, ou passant par l'axe (21) des tourillons de pivotement (10, 11) et l'axe (22) du filet d'entraînement (23).

2. Cric de véhicule selon la revendication 1, caractérisé en ce que l'axe (21) des tourillons de pivotement (10, 11) et/ou l'axe (22) du filet d'entraînement (23) se trouve dans le plan de liaison (15).

3. Cric de véhicule selon la revendication 1 ou la revendication 2, caractérisé en ce que les parties (13, 14) de l'écrou d'entraînement (6) sont fixées en position l'une par rapport à l'autre par liaison de broches (16) et de logements pour broches (17).

4. Cric de véhicule selon une ou plusieurs des revendications 1 à 3, caractérisé en ce que les parties (13, 14) de l'écrou d'entraînement (6) sont reliées entre elles par une articulation (18).

5. Cric de véhicule selon la revendication 4, caractérisé en ce que les parties (13, 14) de l'écrou d'entraînement (6), et l'articulation (18) qui les relie sont formées d'une pièce, en matériau synthétique élastique.

6. Cric de véhicule selon la revendication 5, caractérisé en ce que les parties (13, 14) de l'écrou d'entraînement (6) et l'articulation (18) qui les relie sont réalisées en matériau élastique.

7. Cric de véhicule selon une ou plusieurs des revendications 1 à 6, caractérisé en ce que les parties (13, 14) de l'écrou d'entraînement (6) sont maintenues ensemble par des manchons prévus autour des tourillons de pivotement (10, 11) et/ou de la surface externe du filet d'entraînement (23).

8. Cric de véhicule selon une ou plusieurs des revendications 1 à 7, caractérisé en ce que les parties (13, 14) de l'écrou d'entraînement (6) sont maintenues ensemble par un étrier métallique entourant en tout ou en partie la surface externe du filet d'entraînement (23) et les tourillons de pivotement (11, 12).

9. Cric de véhicule selon une ou plusieurs des revendications 1 à 8, caractérisé en ce que les parties (13, 14) de l'écrou d'entraînement (6) sont fabriquées par coulée ou formage au cours d'un processus de travail avec leur forme externe terminée et les moitiés terminées du filet d'entraînement (23).
